# EUROPÄISCHE PATENTANMELDUNG

(11) **EP 1 345 190 A2**
(43) Veröffentlichungstag der Anmeldung: **17.09.2003**
(21) Anmeldenummer: 03005731.9
(22) Anmeldetag: 13.03.2003
(51) Int. Cl.: G08C 17/02

(54) **Tragbares Informationsgerät und Verfahren zum Liefern von Informationen über eine Mehrzahl von unterschiedlichen Gegenständen**

(30) Priorität: 13.03.2002 DE 10211064
(71) Anmelder: FRAUNHOFER-GESELLSCHAFT ZUR FÖRDERUNG DER ANGEWANDTEN FORSCHUNG E.V., 80636 München (DE)
(72) Erfinder: vom Bögel, Gerd, Dr.-Ing., 42489 Wülfrath (DE); Schliepkorte, Hans-Jürgen, Dipl.-Ing., 44801 Bochum (DE); Scherer, Klaus, Dipl.-Ing., 40235 Düsseldorf (DE)
(74) Vertreter: Zinkler, Franz, Dipl.-Ing.

(57) **Zusammenfassung**

Ein tragbares Informationsgerät zum Liefern von Informationen über eine Mehrzahl von unterschiedlichen Gegenständen zu einem Benutzer des tragbaren Informationsgeräts umfasst eine Einrichtung (14) zum Ermitteln eines Gegenstands der Mehrzahl von Gegenständen, der sich in einem Interaktionsbereich des Benutzers befindet, eine Einrichtung (16) zum Erhalten von Informationen über den ermittelten Gegenstand und eine Einrichtung (18) zum Darstellen der erhaltenen Informationen dem Benutzer gegenüber. Die Einrichtung (16) zum Erhalten von Informationen hat ferner eine weitere Funkschnittstelle für eine Kommunikation mit einer entsprechenden Funkschnittstelle für einen Informationsserver, der entfernt oder an dem Gegenstand angebracht ist. Dadurch wird es möglich, dass ein Benutzer für jeden Gegenstand, wie z.B. ein elektronisches Hausgerät, alle Informationen flexibel erhält und schnell und übersichtlich angezeigt bekommt, wobei immer nur die Informationen des Gegenstands angezeigt werden, mit dem der Benutzer auch interagieren möchte.

## Beschreibung

Die vorliegende Erfindung bezieht sich auf Bedienkonzepte und insbesondere auf drahtlos kommunizierende Bedienkonzepte.

Das Bedürfnis nach elektronischer Assistenz spielt in einer vernetzten und komplexen Welt eine immer größere Rolle. Mobiltelefone, tragbare Computer oder Multimediageräte unterstützen den Menschen schon heute in vielfältiger Weise. Der Prozess des Zusammenwachsens der verschiedenen Gerätewelten hin zu operablen und vernetzten Technologien stellt jedoch nach wie vor eine Herausforderung dar.

Bei der Bedienung von Geräten im Wohn- und Arbeitsumfeld entsteht häufig das Problem, dass eine Bedienung durch eine unübersichtliche Bedienoberfläche erschwert wird, oder dass eine Funktion nicht oder nicht mehr vertraut ist. Ein weiteres Problem besteht darin, dass die in einem Wohn- und Arbeitsumfeld vorhandenen Geräte vielfältiger Natur sind. So wird zwar zu Geräten typischerweise ein Handbuch mitgeliefert. Dieses Handbuch ist jedoch bereits für jedes Gerät, wenn es bereits vielfältige Möglichkeiten der Wartung, Steuerung oder Bedienung hat, relativ voluminös. Bei vielen verschiedenen Geräten, die zu bedienen sind, existiert für jedes Gerät ein solches voluminöses Handbuch, was darin resultiert, dass ein Benutzer, der verschiedene solche Geräte optimal bedienen möchte, eine Vielzahl voluminöser Handbücher mit sich herumtragen oder bereitstellen muss.

Nachteilig an diesem Konzept ist, dass das Bereithalten vieler verschiedener Handbücher durch einen Benutzer unpraktikabel ist und im allgemeinen dazu führt, dass der Benutzer keines der Handbücher bei sich trägt und von jedem Gerät lediglich ein paar Funktionen in seinem Kopf abspeichert, wobei diese Funktionen die des üblichsten und einfachsten Gebrauchs sind. Die anderen Funktionen bieten die entsprechenden Geräte zwar an, sie werden jedoch vom Benutzer allein aufgrund der unpraktikablen Informationsbereitstellung nicht oder kaum genutzt.

Die Aufgabe der vorliegenden Erfindung besteht darin, ein intelligentes Informationskonzept zu schaffen.

Diese Aufgabe wird durch ein tragbares Informationsgerät nach Patentanspruch 1 oder durch ein Verfahren zum Liefern von Informationen über eine Mehrzahl von unterschiedlichen Gegenständen nach Patentanspruch 13 gelöst.

Der vorliegenden Erfindung liegt die Erkenntnis zugrunde, dass ein Benutzer bei der Bedienung bzw. Handhabung verschiedener Gegenstände durch einen intelligenten Assistenten zu unterstützen ist, der dem Benutzer des Assistenten bzw. dem Benutzer der verschiedenen Gegenstände soviel Arbeit als möglich abnimmt und soviel Vorauswahl als möglich bietet. Zu diesem Zweck umfasst ein tragbares Informationsgerät eine Einrichtung zum Ermitteln, welcher einer Mehrzahl von unterschiedlichen Gegenständen sich in einem Interaktionsbereich des Benutzers befindet, woraus geschlossen werden kann, dass der Benutzer Informationen über den Gegenstand erhalten möchte. Das tragbare Informationsgerät umfasst ferner eine Einrichtung zum Erhalten von Informationen über den ermittelten Gegenstand und eine Einrichtung zum Darstellen der erhaltenen Informationen dem Benutzer gegenüber beispielsweise grafisch und/oder akustisch oder auf andere für den Benutzer erkennbare Art und Weise.

Typischerweise wird sich ein Benutzer mehrerer Geräte bzw. Gegenstände dem Gegenstand am meisten nähern, dem das Interesse des Benutzers gilt. Die Einrichtung zum Ermitteln dieses Gegenstandes ist bei einem bevorzugten Ausführungsbeispiel ausgebildet, um Transponder, die auch als Smart-Label ausgebildet sein können, anzusprechen, bzw. auszulesen. Jedem zu bedienenden Gerät bzw. Gegenstand ist ein eigener Transponder zugeordnet.

Im allgemeinen kann zwischen aktiven und passiven Transpondern unterschieden werden. Aktive Transponder können selbsttätig senden, da sie eine eigene Batterie haben. Sie haben deshalb auch eine größere Reichweite, sind aber nicht wartungsfrei, da die Batterie ab und an zu wechseln ist.

Zur Verwendung mit dem tragbaren Informationsgerät werden dagegen passive Transponder bevorzugt, die auch als Smart Labels bezeichnet werden. Diese Transponder haben keine eigene Stromversorgung und sind daher wartungsfrei und preiswert. Sie nehmen die Energie, die sie zum Senden benötigen aus dem Auslese-Funkfeld eines Transponder-Readers. Sie haben daher eine kleinere Reichweite als die aktiven Transponder. Die Nachteile der passiven Transponder sind für die vorliegende Erfindung jedoch gerade vorteilhaft, da sie preiswert und wartungsfrei sind und zudem eine geringe Reichweite haben.

Aus dem empfangenen Transpondersignal bzw. wenn mehrere Transpondersignale erhalten werden, aus dem stärksten empfangenen Transpondersignal erkennt das erfindungsgemäße Informationsgerät den Gegenstand, mit dem sich der Benutzer befassen möchte. Die Einrichtung zum Erhalten von Informationen des erfindungsgemäßen tragbaren Informationsgeräts ist ausgebildet, um dann nur Informationen über diesen Gegenstand zu erhalten. Die Einrichtung zum Darstellen der erhaltenen Informationen zeigt dann dem Benutzer lediglich die erhaltenen Informationen an, jedoch keine Informationen über andere, nicht im Interaktionsbereich des Benutzers liegende Gegenstände.

Das erfindungsgemäße Konzept ist dahingehend vorteilhaft, dass der Benutzer lediglich Informationen über den Gegenstand erhält, mit dem er sich befassen möchte.

Ein weiterer Vorteil der vorliegenden Erfindung besteht darin, dass der Benutzer aufgrund der Tatsache, dass über viele Gegenstände Informationen bereitgestellt werden können, auch über viele Gegenstände Informationen erhalten kann, ohne jedoch immer alle Informationen über alle Gegenstände mit sich führen zu müssen.

Ein weiterer Vorteil der vorliegenden Erfindung besteht darin, dass das erfindungsgemäße tragbare Informationsgerät als drahtlos kommunizierendes Bedienterminal realisierbar ist, das den Benutzer ortsabhängig unterstützt.

Bei dem bevorzugten Ausführungsbeispiel der vorliegenden Erfindung können dem Benutzer nicht nur Wartungs-, Steuerungs- und Bedieninformationen, sondern auch Hilfefunktionen z.B. zum Bedienen des Gegenstands geliefert werden.

Bei einem weiteren bevorzugten Ausführungsbeispiel der vorliegenden Erfindung hat das tragbare Informationsgerät eine Einrichtung zur Identifikation des Benutzers, um festzustellen, welcher Benutzer-Hierarchiestufe der aktuelle Benutzer zugehört, um unterschiedliche Informationen über einen ermittelten Gegenstand abhängig von der Benutzer-Hierarchiestufe zu liefern.

Bevorzugte Ausführungsbeispiele der vorliegenden Erfindung werden nachfolgend Bezug nehmend auf die beiliegenden Figuren detailliert erläutert. Es zeigen:
- Fig. 1: ein Blockschaltbild eines tragbaren Informationsgeräts gemäß der vorliegenden Erfindung;
- Fig. 2: ein Szenario, in dem das in Fig. 1 gezeigte tragbare Informationsgerät vorteilhaft einsetzbar ist.

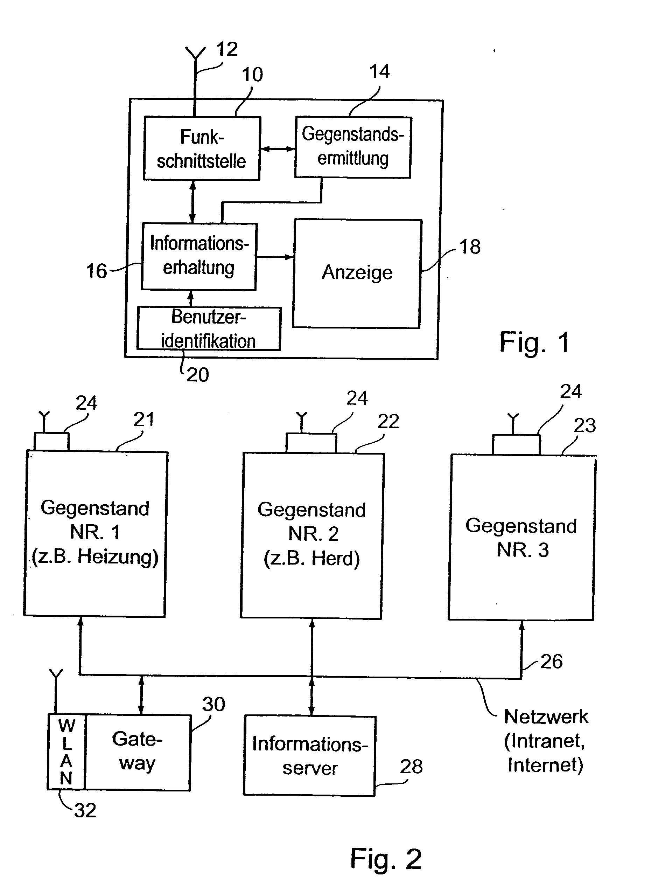

Das tragbare Informationsgerät, das in Fig. 1 gezeigt ist, umfasst eine Drahtlos-Schnittstelle, die vorzugsweise als Funkschnittstelle 10 ausgeführt ist. Die Funkschnittstelle kommuniziert über eine Antenne 12 in einem in Fig. 2 gezeigten Szenario, auf das später eingegangen wird.

Das tragbare Informationsgerät umfasst ferner eine Einrichtung 14 zum Ermitteln eines Gegenstands einer Mehrzahl von Gegenständen, der sich in einem Interaktionsbereich des Benutzers des tragbaren Informationsgeräts von Fig. 1 befindet. Das Informationsgerät umfasst ferner eine Einrichtung 16 zum Erhalten von Informationen über den durch die Einrichtung 14 ermittelten Gegenstand. Die von der Einrichtung 16 erhaltenen Informationen werden mittels einer AnzeigeEinrichtung 18 grafisch, akustisch oder auf eine andere für den Benutzer geeignete Art und Weise dargestellt.

Bei einem bevorzugten Ausführungsbeispiel der vorliegenden Erfindung umfasst das Informationsgerät ferner eine Benutzer-Identifikationseinrichtung 20, die den Benutzer identifiziert und insbesondere feststellt, zu welcher Benutzer-Hierarchiestufe der Benutzer gehört.

Fig. 2 zeigt ein Szenario, in dem das tragbare Informationsgerät von Fig. 1 vorteilhaft eingesetzt werden kann. Das in Fig. 2 gezeigte Szenario umfasst eine Mehrzahl von Gegenständen 21, 22, 23, wobei jedem Gegenstand ein Transponder und eine Antenne zugeordnet sind, die in Fig. 2 mit 24 bezeichnet sind. Das Kommunikationsszenario von Fig. 2 umfasst ferner ein Netzwerk 26, wie z.B. ein Intranet einer abgeschlossenen Entität oder das Internet. Mit dem Netzwerk 26 ist ferner ein Informationsserver 28 sowie eine Gateway 30 verbunden, wobei der Gateway ein WLAN (WLAN = Wireless Local Area Network) 32 zugeordnet ist.

Im nachfolgenden wird anhand einer Haus-Umgebung auf die Funktionalität des erfindungsgemäßen tragbaren Informationsgeräts Bezug genommen. In der Haus-Umgebung existieren mehrere Gegenstände, wie z.B. eine Heizungsanlage (Gegenstand Nr. 1 21), ein Elektroherd (Gegenstand Nr. 2 22) oder irgend einer oder mehrere weitere Gegenstände. Nähert sich der Benutzer, der das tragbare Informationsgerät von Fig. 1 mit sich führt, der Heizungsanlage 21, so wird die Funkschnittstelle 10 ein Signal von dem der Heizungsanlage 21 zugeordneten Transponder erhalten. Nachdem die Heizungsanlage von dem Herd 22 räumlich getrennt ist, wird die Funkschnittstelle kein Signal von dem Transponder 24 erhalten. Daraus schließt die Gegenstandsermittlungseinrichtung 14 von Fig. 1, dass der Benutzer nunmehr etwas mit der Heizungsanlage machen möchte. Abhängig davon, ob der Benutzer z.B. ein Heizungsmonteur ist, oder der Hausmeister ist oder ein Bewohner selbst, werden bei einem bevorzugten Ausführungsbeispiel der vorliegenden Erfindung als Informationen entweder sämtliche Service- und Kontrollfunktionen für den Monteur bereitgestellt. Der Hausmeister kann als eine Benutzer-Hierarchiestufe niedriger als der Heizungsmonteur z.B. Zugriff auf die Tag/Nachtabsenkung der Heizung und/oder auf die Vorlauftemperatur haben, während beispielsweise einem Bewohner, der kein tieferes Bedieninteresse an der Heizung hat, lediglich Zugriff auf die Vorlauftemperatur der Heizung eingeräumt wird. Einem Monteur wird die Einrichtung 16 zur Informationserhaltung daher sämtliche Bedienmöglichkeiten auf der Anzeige 18 grafisch anzeigen, während ein Hausmeister lediglich noch eine Bedienoberfläche zur Einstellung der ihm eingeräumten Funktionen erhält, und während ein Endbenutzer lediglich noch seine eingeschränkte Bedienoberfläche und ggf. die hier zugehörigen Hilfsinformationen erhält. Dies führt dazu, dass für den jeweiligen Benutzer bereits eine Vorauswahl getroffen worden ist, und dass nur der Benutzer mit einer Fülle von Informationen, die typischerweise unübersichtlich sein wird, versehen wird, der damit auch umgehen kann, wie z.B. der Heizungsmonteur.

Bei einem weiteren Aspekt der vorliegenden Erfindung ist die Informationserhaltungseinrichtung ferner ausgebildet, um nicht nur Wartungs-, Steuerungs- oder Bedienfunktionen bereitzustellen, sondern auch Hilfstexte zu erhalten, wie sie in z. B. einem Handbuch des Geräts zu finden sind. Typischerweise wird dies durch eine in Fig. 1 nicht gezeigte Eingabeeinrichtung an dem tragbaren Informationsgerät geschehen, derart, dass der Benutzer beispielsweise eine Taste drückt, um diese Informationen zu erhalten. Auch hier können die Hilfe-Informationen wieder abhängig von der Benutzer-Hierarchiestufe gestaffelt sein, um einen Endbenutzer nicht mit für ihn ohnehin nicht verständlichen technischen Detailinformationen beispielsweise über die Heizungsanlage zu verwirren, sondern um ihm lediglich die Informationen bereitzustellen, die er auch braucht.

Um eine möglichst einfache Bedien- und Hilfsunterstützung zu erreichen, werden somit zu bedienende Geräte von dem tragbaren Informationsgerät geortet. Der Benutzer erhält dann, wenn er sich vor dem bestimmten Gerät befindet, direkt die zu dem Gerät gehörende Bedienoberfläche angezeigt.

Wie es bereits ausgeführt worden ist, wird die Ortung durch die Smart-Label 24 ermöglicht, die an den Geräten angebracht sind und von dem tragbaren Informationsgerät erkannt und zugeordnet werden. Bei diesem Ausführungsbeispiel ist die Funkschnittstelle 10 zur Realisierung dieser Funktion ausgebildet, wobei eine solche Funkschnittstelle beispielsweise als Transponder-Basisstation als weitere Schnittstelle in Form einer PCMCIA-Karte in einem tragbaren Computer, in einem Mobiltelefon oder einem PDA (PDA = Personal Digital Assistant) integriert ist.

Die Transponder-Basisstation 10 fragt bei einem Ausführungsbeispiel der vorliegenden Erfindung die im Lesebereich, d.h. Interaktionsradius, vorhandenen Transponder ab und gibt die gelesenen Informationen über eine Kommunikationsleitung zu der Gegenstandsermittlungs-Einrichtung 14 weiter, die typischerweise als Softwareprogramm implementiert ist. Alternativ können auch die in den Gegenständen 21, 22, 23 angebrachten Transponder quasi- kontinuierlich senden.

Bei einem bevorzugten Ausführungsbeispiel der vorliegenden Erfindung deckt der Lesebereich bei der Verwendung von aktiven Transpondern den Raum im Abstand von weniger als 2 m und vorzugsweise von weniger als einem Meter um das Bediengerät ab, um eine hohe Ortsauflösung der Einrichtung zum Ermitteln zu erreichen.

Die Einrichtung 14 zur Gegenstandsermittlung wertet die gelesenen Daten des Transponders (Smart Label) aus und aktiviert die Informationserhaltungs-Einrichtung 16, die in der Lage ist, über die Funkschnittstelle 10, die neben der Transponder-Lesefähigkeit beispielsweise auch eine WLAN-Schnittstelle umfasst, gerätespezifische Seiten über das Netzwerk 26 von dem Informationsserver 28 zu erhalten. Der Informationsserver 28 kann beispielsweise bei jeweiligen Herstellern der verschiedenen Gegenstände 21 bis 23 oder als Internet-Server dezentral ausgeführt sein. Alternativ könnte auch ein zentraler Server vorhanden sein, den die Hersteller der verschiedenen in Betracht kommenden Gegenstände mit Informationen versorgen, und auf den die Informationserhaltungs-Einrichtung 16 über die Funkschnittstelle 10 zugreift.

Je nach Szenario verbindet sich somit das tragbare Informationsgerät über ein WLAN zum Netzwerk des Hauses (Intranet) und lädt die referenzierten HTML-Seiten oder Java-Applets des aktuell ermittelten Gegenstands.

Wie es ausgeführt worden ist, befinden sich die HTML-Seiten oder Java-Applets in dem Informationsserver 28, der jedoch nicht unbedingt im Internet oder als zentraler Intranet-Server vorhanden sein kann, sondern der auch als ein Embedded-http-Server in den einzelnen Geräten oder als zentraler Home-Server ausgeführt sein kann. Der zentral oder dezentral organisierte Informationsserver 28 stellt somit die Schnittstelle zwischen dem Intranet 26 und der Bedien- und Steuerelektronik des entsprechenden Gegenstands 21, 22, 23 dar. Je nach Ausführungsform reichen die Inhalte bzw. die Funktionen der HTML-Seiten oder die Java-Applets von gerätespezifischen HILFE-Seiten bis hin zu Bedien-, Kontrollund Wartungsfunktionen.

Ist der zentrale Informationsserver 28 im Internet angeordnet, so wird es bevorzugt, dass die Internet-Seite, von der die Informationserhaltungs-Einrichtung 16 Informationen herunterlädt durch eine Internet-Adresse referenzierbar ist, die bereits in dem Signal verschlüsselt vorhanden ist, dass von dem Transponder 24, der einem spezifischen Gerät zugeordnet ist, zum tragbaren Informationsgerät übermittelt wird.

## Patentansprüche

1. Tragbares Informationsgerät zum Liefern von Informationen über eine Mehrzahl von unterschiedlichen Gegenständen (21, 22, 23) zu einem Benutzer des tragbaren Informationsgeräts, wobei jeder der Gegenstände mit einem Transponder (24) versehen ist, mit folgenden Merkmalen:
einer Einrichtung (14) zum Ermitteln eines Gegenstands der Mehrzahl von Gegenständen, der sich in einem Interaktionsbereich des Benutzers befindet.
einer Einrichtung (16) zum Erhalten von Informationen über den ermittelten Gegenstand;
einer Einrichtung (18) zum Darstellen der erhaltenen Informationen dem Benutzer gegenüber; und
einer Drahtlos-Schnittstelle (10),
wobei die Einrichtung (14) zum Ermitteln ausgebildet ist, um mit der Drahtlos-Schnittstelle (10) zu kommunizieren, um ein Funksignal von einem Transponder eines Gegenstandes zu empfangen, der sich in dem Interaktionsbereich des Benutzers befindet, wobei das Funksignal eine Gegenstands-Identifikationsinformation aufweist,
wobei die Einrichtung (16) zum Erhalten von Informationen eine weitere Funkschnittstelle für eine Kommunikation mit einer entsprechenden Funkschnittstelle (32) für einen Informationsserver (28) umfasst, der entfernt oder an dem Gegenstand angebracht ist, und
wobei die Einrichtung (16) zum Erhalten ausgebildet ist, um abhängig von dem Funksignal Informationen über den ermittelten Gegenstand von dem Informationsserver (28) über die Funkschnittstelle (32) für den Informationsserver und die Drahtlos-Schnittstelle (10) anzufordern.

2. Tragbares Informationsgerät nach Anspruch 1,
bei dem die Funkschnittstelle einen Sender und/oder einen Empfänger mit einer Reichweite aufweist, die kleiner oder gleich dem Interaktionsbereich ist.

3. Tragbares Informationsgerät nach einem der vorhergehenden Ansprüche,
bei dem der Interaktionsbereich einen Radius von weniger als 2 und vorzugsweise weniger als 1 m um den Benutzer herum umfasst.

4. Tragbares Informationsgerät nach einem der vorhergehenden Ansprüche,
bei dem die Gegenstände elektronische Geräte umfassen.

5. Tragbares Informationsgerät nach Anspruch 4,
bei dem die Informationen Wartungs-, Steuerungsund/oder Bedieninformationen für die elektronischen Geräte umfassen.

6. Tragbares Informationsgerät nach einem der Ansprüche 1 bis 5,
bei dem die Informationen ferner Hilfeinformationen über eine Wartung, Steuerung und/oder Bedienung des ermittelten elektronischen Geräts umfassen.

7. Tragbares Informationsgerät nach einem der vorhergehenden Ansprüche,
bei dem die Einrichtung (16) zum Erhalten von Informationen ausgebildet ist, um Informationen über eine Bedienoberfläche zu erhalten.

8. Tragbares Informationsgerät nach einem der vorhergehenden Ansprüche , bei dem das elektronische Gerät eine Fernsteuerungsschnittstelle hat, und
bei dem das tragbare Informationsgerät ferner eine Fernsteuerungs-Schnittstelle hat, um einem Benutzer eine Fernbedienung des ermittelten elektronischen Geräts zu ermöglichen.

9. Tragbares Informationsgerät nach einem der vorhergehenden Ansprüche,
das ferner eine Benutzer-Identifikationseinrichtung (20) aufweist, um festzustellen, welcher Benutzer-Hierarchiestufe der Benutzer angehört, und
bei dem die Einrichtung (16) zum Erhalten von Informationen ferner ausgebildet ist, um abhängig von der durch die Benutzeridentifikations-Einrichtung (20) gelieferten Benutzer-Hierarchiestufe nur bestimmte Informationen über den ermittelten Gegenstand zu erhalten.

10. Tragbares Informationsgerät nach einem der vorhergehenden Ansprüche,
bei dem die Gegenstände Hausgeräte sind; und .
bei dem die Einrichtung (16) zum Erhalten ausgebildet ist, um Informationen über das ermittelte Hausgerät über ein Haus-Intranet (26) von einem Haus-Server (28) zu laden.

11. Tragbares Informationsgerät nach Anspruch 1, bei dem die Einrichtung (14) zum Ermitteln ausgebildet ist, um passive Transponder auszulesen.

12. Tragbares Informationsgerät nach Anspruch 1, bei dem eine Internetseite, von der die Einrichtung (16) zum Erhalten Informationen über die Funkschnittstelle (32) für den Informationsserver und die Drahtlos-Schnittstelle (10) herunterladen kann, eine Internetadresse hat, die in dem Funksignal von dem Transponder verschlüsselt ist, der sich in dem Interaktionsbereich befindet.

13. Verfahren zum Liefern von Informationen über eine Mehrzahl von unterschiedlichen Gegenständen zu einem Benutzer wobei jeder der Gegenstände mit einem Transponder (24) versehen ist, mit folgenden Schritten:
Ermitteln (14) eines Gegenstands der Mehrzahl von Gegenständen, der sich in einem Interaktionsbereich des Benutzers befindet;
Erhalten (16) von Informationen über den ermittelten Gegenstand; und
Darstellen (18) der erhaltenen Informationen dem Benutzer gegenüber.
wobei der Schritt des Ermittelns (14) den Schritt des drahtlosen Kommunizierens aufweist, um ein Funksignal von einem Transponder eines Gegenstandes zu empfangen, der sich in dem Interaktionsbereich des Benutzers befindet, wobei das Funksignal eine Gegenstands-Identifikationsinformation aufweist,
wobei der Schritt des Erhaltens (16) den Schritt des drahtlosen Kommunizierens mit einer Funkschnittstelle (32) für einen Informationsserver (28) umfasst, der entfernt oder an dem Gegenstand angebracht ist, und
wobei der Schritt des Erhaltens (16) ferner den Schritt des Anforderns von Informationen über den ermittelten Gegenstand von dem Informationsserver (28) über die Funkschnittstelle (32) für den Informationsserver umfasst, wobei die angeforderten Informationen von dem Funksignal abhängen.
